# EUROPEAN PATENT SPECIFICATION

(11) **EP 2 951 415 B1**
(45) Date of publication and mention of the grant of the patent: **27.10.2021**
(21) Application number: 14746891.2
(22) Date of filing: 27.01.2014
(51) Int. Cl.: F02B 37/18, F02D 9/04, F02M 26/05, F02M 26/10, F01N 13/08, F02C 6/12, F02B 37/22

(54) **A COMBUSTION ENGINE**
VERBRENNUNGSMOTOR
MOTEUR À COMBUSTION INTERNE

(30) Priority: 31.01.2013 SE 1350110
(43) Date of publication of application: 09.12.2015
(73) Proprietor: Scania CV AB, 151 87 Södertälje (SE)
(72) Inventor: SPONTÓN, Ove, S-610 75 Västerljung (SE)
(74) Representative: Scania CV AB
(86) International application number: PCT/SE2014/050103
(87) International publication number: WO 2014/120067

(56) References cited:
- GB-A- 2 353 328
- US-A- 5 553 575
- US-A1- 2002 100 280
- US-A1- 2005 091 976
- US-A1- 2009 255 517
- US-A1- 2012 204 570
- None

## Description

### BACKGROUND

The present invention relates to a combustion engine comprising a turbo unit and a vehicle with such a combustion engine.

EGR systems are used to purify the exhaust gases from petrol and diesel engines. Nitrogen oxides are formed when the nitrogen and oxygen in the air react at the high temperatures and pressures occurring in the engine's combustion chamber. EGR, which is an abbreviation of the term exhaust gas recirculation, entails the exhaust gases from the engine being returned to the intake side of the engine. The exhaust gases will lower the combustion temperatures in the engine's combustion chamber, reducing the nitrogen oxides. On supercharged engines there are so-called long and short EGR systems. In the case of the short system the EGR duct is connected with the intake system downstream of the compressor and usually downstream of a charging air cooler for the intake air, thereby resulting in the EGR system being joined to the high-pressure side of the compressor. In the case of the long system the EGR duct is connected downstream of the turbine and upstream of the compressor.

One advantage of using the short EGR system is to lessen the space required for the EGR system, thereby reducing the weight of the EGR system as well. The exhaust gases from a piston engine exit the combustion chamber during the exhaust stroke at positive pressure, causing the pressure in the engine's exhaust gas system to pulsate, which in turn results in the exhaust gas flow pulsating. Since the EGR system is connected to the engine's exhaust gas system, the pressure and flow of the exhaust gases in the EGR system will vary and thus pulsate.

On the intake side a pressure situation prevails which is considerably more even than the heavily pulsating pressure prevailing on the exhaust gas side. In an EGR system this results in periodically intense drive pressure in the forward direction followed by pressure in the reverse direction between the pulses of exhaust gas. The pressure in the reverse direction drives a return flow, which brings about a loss of power and hence increased fuel consumption since the flow in the forward direction has to contain both the working flow and the return flow. The necessary drive pressure rises, leading to an increase in the gas exchange work.

At each particular operating point with regard to the torque and speed of the combustion engine, the charging pressure of the torque is determined on a turbocharged combustion engine, which runs at a mixture ratio of air to fuel corresponding to the lambda value 1. If EGR is used, the turbine pressure is determined by the charging pressure plus drive pressure needed to drive the EGR flow. The available pressure and the flow of exhaust gases from the combustion engine are considerably higher than necessary for the turbine to perform the requisite work to drive the compressor in the turbo unit. If the efficiency of the turbine is greater than desired, the net result will be a higher charging pressure, a higher speed of rotation in the moving components forming part of the turbo unit, a higher cylinder pressure in the combustion engine, and increased heat emission from the combustion engine and appurtenant components. This also leads to increased fuel economy and carbonization of the combustion engine's oil. For these reasons, therefore, some exhaust gas flow is led past the turbine in the form of a lateral flow through a so-called waste gate duct.

However, the size of the waste gate duct must be dimensioned to handle the exhaust gas flow even at the combustion engine's highest speed; as a result, the waste gate duct is over-engineered when the combustion engine is driven at low speed. A waste gate valve placed in the waste gate duct is then used to regulate and limit the exhaust gas flow through the waste gate duct. Since high speed in the combustion engine is a design factor governing the size of the waste gate valve, a large waste gate valve is obtained, which yields a poor performance in terms of regulation at lower combustion engine speeds. In the case of a combustion engine fitted with an EGR system, the waste gate valve is used to regulate the drive pressure in the EGR system, which leads to the regulation system becoming enfeebled. This leads to the combustion engine's fuel consumption increasing and to emissions given off by the combustion engine reaching undesirable levels.

A previously known arrangement provides a turbo unit with a series expansion device in which is arranged a flow-limiting unit in the form of a throttle in a exhaust gas pipe connected from the turbine outlet. This enables the size of the turbine to be dimensioned to the size of the flow-limiting unit with a view to achieving the desired expansion through the turbine and flow-limiting unit, which results in the turbine-powered compressor delivering the desired charging pressure to the combustion engine. However, such a known series expansion device will only be adapted to a number of predetermined operating points with regard to the driving torque and speed of the combustion engine.

The document US 2002/0100280 shows a combustion engine with a turbo unit fitted with a series expansion device with a view to optimizing the efficiency of the turbo unit's turbine in order to thus optimize the combustion engine's fuel economy. The turbine can be provided with controllable geometry and/or a waste gate. The combustion engine is also provided with an EGR system in which an EGR cooler and a valve are arranged.

The document US 2005/0091976 relates to a turbo unit with a series expansion device and a waste gate duct with properties tailored to a diesel engine.

### SUMMARY

Despite known solutions in the field there is a need to further develop an expansion device for a turbine in a turbo unit which enables a combustion engine to which the turbo unit is connected to be driven at a number of predetermined operating points with regard to the driving torque and speed of the combustion engine while simultaneously being able to accurately regulate the drive pressure supplied to an EGR system connected to the combustion engine. There is also a need to further develop a combustion engine with such a turbo unit which works with low fuel consumption.

The aim of the present invention is to accomplish an expansion device for a turbine in a turbo unit, which expansion device allows precise regulation of the drive pressure in an EGR system.

Another aim of the invention is to accomplish an expansion device for a turbine in a turbo unit, which expansion device allows a combustion engine to be operated at a number of predetermined operating points with regard to the driving torque and speed of the combustion engine.

Another aim of the invention is to accomplish a combustion engine which discharges low emissions.

An additional aim of the invention is to accomplish a combustion engine which works with low fuel consumption.

These aims are achieved with a series expansion device of the kind mentioned by way of introduction and characterized by the distinctive features set out in the characterizing part of patent claim 1.

By arranging the flow-limiting unit in the second exhaust gas pipe and in series with the turbine, the correlation obtained between the expansion across the turbine and the flow-limiting unit, respectively, is considerably less dependent on the size of the waste gate duct for its speed. By having a cross-sectional area, which is smaller than the cross-sectional area of the second exhaust gas pipe, the resultant exhaust gas duct in which a waste gate valve with small dimensions can be arranged is considerably smaller, making for better regulatory performance and allowing precise regulation of the drive pressure in the EGR system. If the correlation between the exhaust gas flow through the turbine and the respective waste gate duct alters, this also produces return-loss as the relative fault associated with regulating the waste gate valve diminishes in absolute terms, which additionally increases the accuracy of the drive pressure regulation in the EGR system.

One occurrence with diesel engines is that the waste gate valve is closed at low speed and open at high speed. According to the present invention, regulation of the waste gate valve will not be speed dependent but instead the waste gate duct can be dimensioned so that the whole of the waste gate valve's regulatory stroke can be used for regulation purposes at all operating points. In the case of a diesel engine the drive pressure for EGR is regulated with a very small amplitude and with a large waste gate valve, which will result in regulatory pressure with a great margin for error in the EGR system. According to the present invention, it allows the use of a considerably smaller waste gate valve whose resting position is independent of speed. This makes for considerably greater regulatory amplitude, which yields considerably better regulatory performance without using special valves with expensive actuators. One of the reasons for this difference in the application of the invention to an Otto-type combustion engine is that the diesel engine operates on an excess of air with high charging pressure, making it simpler to achieve correct and precise pressure relations with normal turbine dimensions in the Otto engine.

Additional advantages of the invention are brought out in the following detailed description.

### BRIEF DESCRIPTION OF THE DRAWINGS

By way of example, embodiments of the invention is described below, with reference to attached drawings, in which:
- Fig. 1: shows a schematic side-on view of a vehicle, which includes an expansion device for a turbine in a turbo unit,
- Fig. 2: shows a schematic view of a combustion engine with the series expansion device,
- Fig. 3: shows a schematic view of the series expansion device,
- Fig. 4: shows a cross-sectional view of a waste gate duct along the section I-I in Fig. 3,
- Fig. 5: shows a cross-sectional view of a flow-limiting unit along the section II-II in Fig. 3,
- Fig. 6: shows graphs of a combustion engine's speed in relation to the engine's torsional moment for various cross-sectional areas in a flow-limiting unit in the series expansion device, and

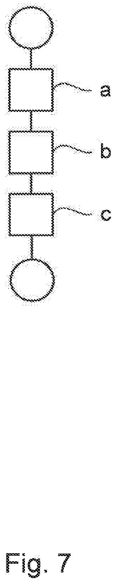

- Fig. 7: shows a flow chart for a method for regulating a combustion engine

### DETAILED DESCRIPTION

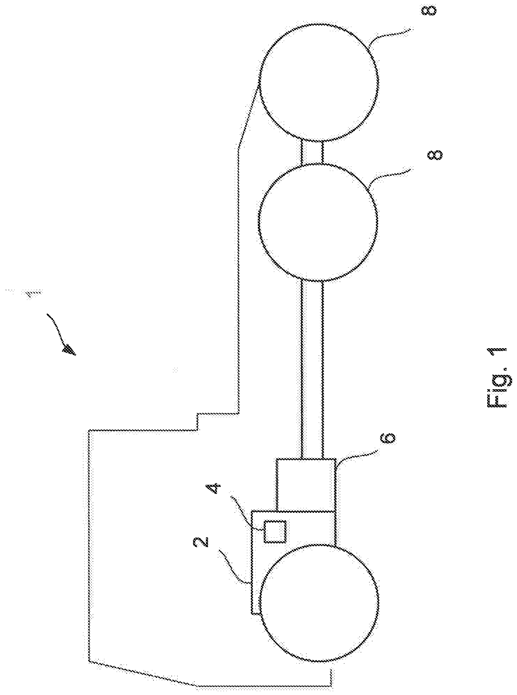

Fig. 1 shows a schematic side-on view of a vehicle 1, a vehicle which includes an expansion device 4. The combustion engine 2 is connected to a gearbox 6 and the gearbox 6 is further connected to the vehicle's 1 driving gear 8. The combustion engine 2 is a piston engine of the Otto engine type.

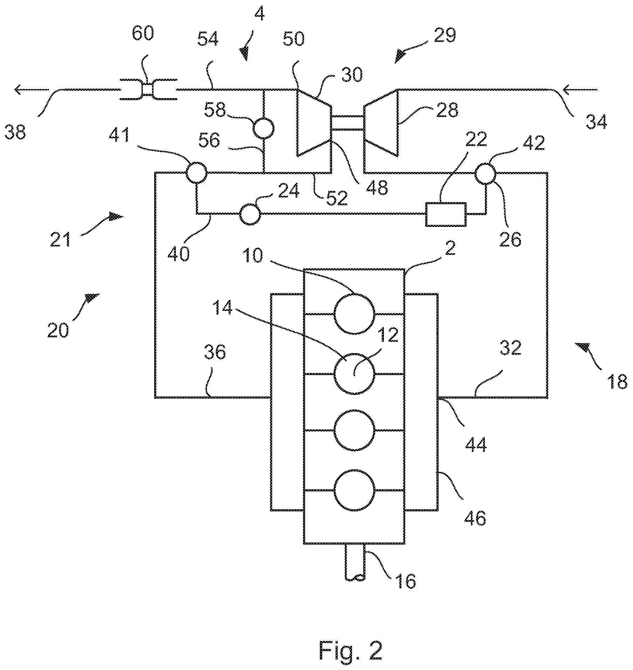

Fig. 2 shows a schematic view of a combustion engine 2 with the series expansion device 4. According to the embodiment example shown the combustion engine 2 has four cylinders 10, each cylinder 10 housing a piston 12 and a combustion chamber 14. The engine 2 also presents an output shaft 16. The combustion engine 2 includes an intake system 18 for supplying air to the combustion chamber 14 and a exhaust gas system 20 for removing exhaust gases from the combustion chamber 14. Between the intake system 18 and the exhaust gas system 20 an EGR system 21 is arranged. The EGR system 21 is connected to the exhaust gas system 20 and an EGR valve 24 controls the volume of exhaust gases supplied to the EGR system 21 in the form of EGR gases. With a view to increasing engine output it is possible to arrange an EGR cooler 22 in the EGR system 21 so that the EGR gases are cooled before being supplied to the intake air from a compressor 28 forming part of a turbo unit 29. The EGR system 21 is connected to the intake system 18 downstream of the EGR cooler 22 arranged in the EGR system 21 at a juncture point 26 where the EGR gases are supplied to the air in the intake system 18. The EGR system 21 is connected to the intake system 18 downstream of the compressor 28, which results in the EGR system 21 being connected to the high-pressure side of the compressor 28.

The compressor 28 is operated according to the embodiment example shown of the engine's 2 exhaust gases from a turbine 30, arranged in the turbo unit 29 connected to the exhaust gas system 20. The intake system 18 is preferably constructed from piping and hosing 32, which conveys the ingested, surrounding air from an intake port 34 through the compressor 28 and finally to the engine's 2 combustion chamber 14. The exhaust gas system 20 is preferably constructed from piping 36, which conveys the hot exhaust gases from the combustion engine's 2 combustion chamber 14, through the turbine 30 and on out to the surroundings via a exhaust gas pipe aperture 38. The EGR system 21 is also constructed from piping 40 which conveys the exhaust gases from a juncture point 41 via an EGR valve 24 and the EGR cooler 22 and on to a connection device 42 at the juncture point 26 where the EGR gases 25 are supplied with the air in the intake system 18. The EGR gases 25 are thus supplied and blended with the intake air at the juncture point 26 and conveyed onwards in the intake system 18 to a branch point 44 where the blended EGR gases 25 and the intake air enter an inlet pipe 46, which conveys the blended EGR gases 25 and the intake air on to the respective combustion chamber 14.

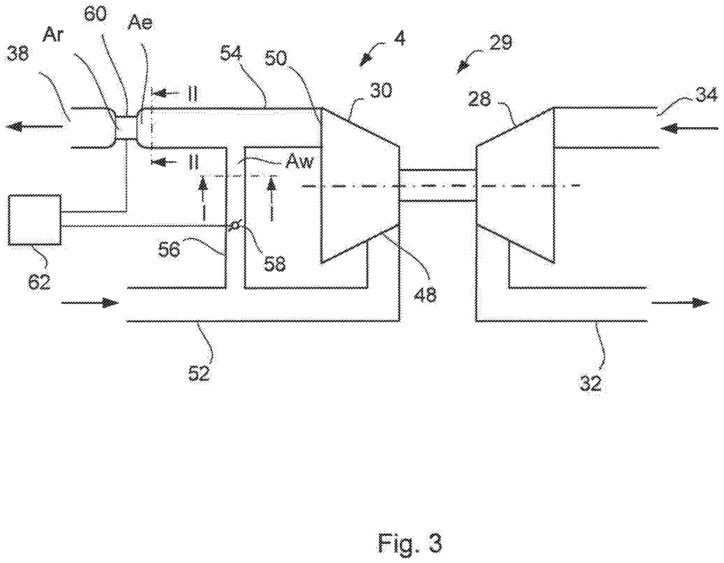

Fig. 3 is a detailed view of Fig. 2 and shows the series expansion device 4.The turbine 30 includes a turbine inlet 48 and turbine outlet 50 for the throughflow of exhaust gases to and from the turbine 30. The exhaust gas system 20 includes a first exhaust gas pipe 52, which is connected to the turbine inlet 48, and a second exhaust gas pipe 54, which is connected to the turbine outlet 50. A waste gate duct 56 is connected to the first and second exhaust gas pipes 52, 54, whereby a waste gate valve 58 arranged in the waste gate duct 56 is configured to regulate the exhaust gas flow through the waste gate duct 56. The job of the waste gate duct 56 is to convey a particular exhaust gas flow past the turbine 30 in the form of a lateral flow for reasons outlined above.

A flow-limiting unit 60 is arranged in the second exhaust gas pipe 54 downstream of the point where the waste gate duct 56 discharges into the second exhaust gas pipe 54. Thus the waste gate duct 56 discharges into the second exhaust gas pipe 54 downstream of the turbine outlet 50 and upstream of the flow-limiting unit 60. The exhaust gases passing through the turbine 30 and the flow-limiting unit 60 will expand owing to the drop in pressure, as a result of which the size of the turbine 30 can be engineered according to the size of the flow-limiting unit 60 with an eye to obtaining the desired expansion through the turbine 30 and the flow-limiting unit 60, which will result in the compressor 28 operated by the turbine 30 providing the desired charging pressure to the combustion engine 2.

The flow-limiting unit 60 placed in the second exhaust gas pipe 54 is a passive unit without moving components. The flow-limiting unit 60 thus has a predetermined cross-sectional area Ar, which is smaller than the second exhaust gas pipe's 54 cross-sectional area Ae.

The waste gate valve 58 is also used to regulate the drive pressure in the EGR system 21. Precise adjustment of the EGR system's 21 drive pressure is made possible if the waste gate valve 58 is dimensioned to accurately regulate and restrict the exhaust gas flow through the waste gate valve 58. By designing the waste gate duct 56 with a cross-sectional area Aw smaller than the second exhaust gas pipe's 54 cross-sectional area Ae, the waste gate valve 58 can be engineered so as to achieve fine adjustment of the exhaust gas flow through the waste gate duct 56, thereby achieving good regulatory performance at both higher and lower combustion engine 2 speeds. The result is that the combustion engine's 2 fuel consumption can be restricted and emissions from the combustion engine 2 kept within the desired parameters.

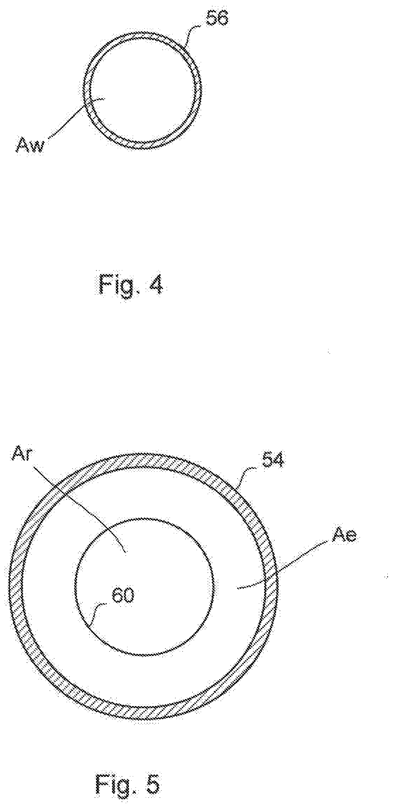

Fig. 4 shows a cross-sectional view of the waste gate duct 56 along the section I-I in Fig. 3, and Fig. 5 shows a cross-sectional view of the flow-limiting unit 60 along the section II-II in Fig. 3. The waste gate duct's 56 cross-sectional area Aw is dimensioned so as to be smaller than both the second exhaust gas pipe's 54 cross-sectional area Ae and the flow-limiting unit's 60 cross-sectional area Ar, as shown by Figures 4 and 5. The waste gate duct 56, the second exhaust gas pipe 54 and the flow-limiting unit 60 preferably have a circular cross-section, whereby the waste gate duct 56 has a diameter smaller than the diameter of both the second exhaust gas pipe 54 and the flow-limiting unit 60. As mentioned above, however, the waste gate duct 56 can be given a cross-sectional area Aw the same size as or smaller than the flow-limiting unit's 60 cross-sectional area Ar, allowing the waste gate duct 56 to have a diameter the same size as or smaller than that of the flow-limiting unit 60. It is possible to give the waste gate duct 56, the second exhaust gas pipe 54 and the flow-limiting unit 60 an arbitrary cross-sectional shape. The flow-limiting unit 60 can present a long or short length.

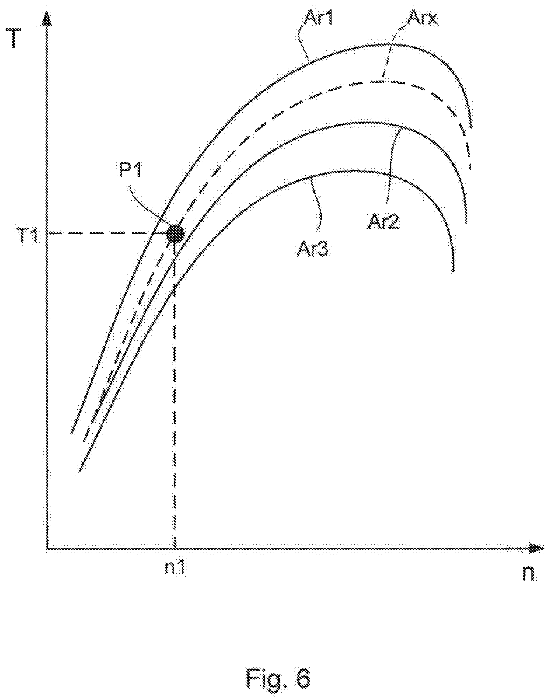

Fig. 6 shows graphs of a combustion engine's 2 speed in relation to its torsional moment T for a number of different cross-sectional areas Ar1-Ar3 in the flow-limiting unit 60 in the series expansion device 4. According to the example in Fig. 6 the cross-sectional area Ar1 is greater than the cross-sectional area Ar2, which in turn is greater than the cross-sectional area Ar3. By selecting a given cross-sectional area Ar for the flow-limiting unit 60 that best matches optimum turbine efficiency for various operating points in the combustion engine 2, the graph obtained corresponds to, for instance, the graph representing the cross-sectional area Ar2 in the flow-limiting unit 60, thereby positioning a flow-limiting unit 60 with the cross-sectional area Ar2 in the second exhaust gas pipe 54. At each particular operating point with regard to the torque and speed of the combustion engine 2, the charging pressure of the torque is determined on a turbocharged combustion engine 2 which runs at a mixture ratio of air to fuel corresponding to the lambda value 1. When EGR is used, the turbine pressure is determined by the charging pressure plus drive pressure needed to drive the EGR flow. In order to achieve optimum drive pressure to drive the EGR flow at a given operating point, the desired exhaust gas flow through the waste gate duct 56 can be adjusted by using the control unit 62 to set the waste gate valve 58 to a suitable position. Being dimensioned to accurately regulate and restrict the exhaust gas flow through the waste gate valve 58, the waste gate valve 58 allows accurate adjustment of the EGR system's 21 drive pressure. If a flow-limiting unit 60 with the cross-sectional area Ar2 is arranged in the second exhaust gas pipe 54 and the combustion engine 2 is driven at an operating point PI corresponding to the speed n1 and the torque T1 in Fig. 6, the desired exhaust gas flow through the waste gate duct 56 can be adjusted by using the control unit 62 to set the waste gate valve 58 to a position so as to obtain the drive pressure needed to drive the EGR flow, thereby restricting the combustion engine's 2 fuel consumption and keeping the emissions from the combustion engine 2 within desired parameters.

## Claims

1. A combustion engine (2) comprising a turbo unit (29) having a compressor (28) and a turbine (30) including a turbine inlet (48) and turbine outlet (50) for the throughflow of exhaust gases to and from the turbine (30),
an EGR system (21) arranged between an intake system (18) and the exhaust gas system (20) of the combustion engine (2), wherein the EGR system (21) is connected to the intake system (18) downstream of the compressor (28) and connected to the exhaust gas system (20) upstream of the turbine (30),
a first exhaust gas pipe (52), which is connected to the turbine inlet (48),
a second exhaust gas pipe (54), which is connected to the turbine outlet (50),
a waste gate duct (56), which is connected to the first and second exhaust gas pipes (52, 54), and a flow-limiting unit (60) arranged in the second exhaust gas pipe (54), which flow-limiting unit (60) has a cross-sectional area (Ar) smaller than the second exhaust gas pipe's (54) cross-sectional area (Ae),
wherein the waste gate duct (56) has a cross-sectional area (Aw) which is smaller than the second exhaust gas pipe's (54) cross-sectional area (Ae) and in that a waste gate valve (58) arranged in the waste gate duct (56) is adapted to fine adjustment of the exhaust gas flow through the waste gate duct (56), and
wherein the waste gate duct's (56) cross-sectional area (Aw) is the same size as or smaller than the flow-limiting unit's (60) cross-sectional area (Ar), and wherein the waste gate duct (56) flows into the second exhaust gas pipe (54) upstream of the flow-limiting unit (60), and wherein the flow-limiting unit (60) is a passive unit without moving components and wherein the combustion engine (2) is an Otto engine.

2. Vehicle (1) **characterized in that** it includes a combustion engine (2) according to claim 1.

## Patentansprüche

1. Verbrennungsmotor (2), mit
einer Turboladereinheit (29), die einen Verdichter (28) und eine Turbine (30) mit einem Turbineneinlass (48) und einem Turbinenauslass (50) zum Durchfluss von Abgasen in die und aus der Turbine (30) aufweist,
einem Abgasrückführungssystem (21), das zwischen einem Einlasssystem (18) und der Abgasanlage (20) des Verbrennungsmotors (2) angeordnet ist, wobei das Abgasrückführungssystem (21) mit dem Einlasssystem (18) stromabwärts des Verdichters (28) verbunden ist und mit der Abgasanlage (20) stromaufwärts der Turbine (30) verbunden ist,
einer ersten Abgasleitung (52), die mit dem Turbineneinlass (48) verbunden ist,
einer zweiten Abgasleitung (54), die mit dem Turbinenauslass (50) verbunden ist,
einer Ladedruckregelventilleitung (56), die mit der ersten und zweiten Abgasleitung (52, 54) verbunden ist, und
einer in der zweiten Abgasleitung (54) angeordneten Strömungsbegrenzungseinrichtung (60), wobei die Strömungsbegrenzungseinrichtung (60) eine Querschnittsfläche (Ar) hat, die kleiner ist als die Querschnittsfläche (Ae) der zweiten Abgasleitung (54),
wobei die Ladedruckregelventilleitung (56) eine Querschnittsfläche (Aw) hat, die kleiner ist als die Querschnittsfläche (Ae) der zweiten Abgasleitung (54), und wobei ein in der Ladedruckregelventilleitung (56) angeordnetes Ladedruckregelventil (58) zur Feineinstellung des Abgasstroms durch die Ladedruckregelventilleitung (56) eingerichtet ist, und
wobei die Querschnittsfläche (Aw) der Ladedruckregelventilleitung (56) gleich groß oder kleiner ist als die Querschnittsfläche (Ar) der Strömungsbegrenzungseinheit (60), und wobei die Ladedruckregelventilleitung (56) stromaufwärts der Strömungsbegrenzungseinheit (60) in die zweite Abgasleitung (54) mündet, und wobei die Strömungsbegrenzungseinheit (60) eine passive Einheit ohne bewegliche Bauteile ist und wobei der Verbrennungsmotor (2) ein Ottomotor ist.

2. Fahrzeug (1), **dadurch gekennzeichnet, dass** es einen Verbrennungsmotor (2) nach Anspruch 1 enthält.

## Revendications

1. Moteur à combustion (2) comprenant une unité de turbo (29) ayant un compresseur (28) et une turbine (30) incluant une entrée de turbine (48) et une sortie de turbine (50) pour l'écoulement de gaz d'échappement vers la turbine (30) et depuis celle-ci,
un système EGR (21) agencé entre un système d'admission (18) et le système de gaz d'échappement (20) du moteur à combustion (2), dans lequel le système EGR (21) est raccordé au système d'admission (18) en aval du compresseur (28) et raccordé au système de gaz d'échappement (20) en amont de la turbine (30),
un premier tuyau de gaz d'échappement (52), qui est raccordé à l'entrée de turbine (48),
un second tuyau de gaz d'échappement (54), qui est raccordé à la sortie de turbine (50),
un conduit de soupape de décharge (56), qui est raccordé aux premier et second tuyaux de gaz d'échappement (52, 54), et une unité de limitation de débit (60) agencée dans le second tuyau de gaz d'échappement (54), laquelle unité de limitation de débit (60) a une aire de section transversale (Ar) plus petite que l'aire de section transversale (Ae) du second tuyau de gaz d'échappement (54),
dans lequel le conduit de soupape de décharge (56) a une aire de section transversale (Aw) qui est plus petite que l'aire de section transversale (Ae) du second tuyau de gaz d'échappement (54) et en ce qu'une vanne de soupape de décharge (58) agencée dans le conduit de soupape de décharge (56) est adaptée pour un réglage fin du débit de gaz d'échappement à travers le conduit de soupape de décharge (56), et
dans lequel l'aire de section transversale (Aw) du conduit de soupape de décharge (56) est de la même taille que l'aire de section transversale (Ar) de l'unité de limitation de débit (60) ou plus petite que celle-ci, et dans lequel le conduit de soupape de décharge (56) s'écoule dans le second tuyau de gaz d'échappement (54) en amont de l'unité de limitation de débit (60), et dans lequel l'unité de limitation de débit (60) est une unité passive sans composants mobiles et dans lequel le moteur à combustion (2) est un moteur à allumage par étincelles.

2. Véhicule (1) **caractérisé en ce qu'**il inclut un moteur à combustion (2) selon la revendication 1.
